# EUROPEAN PATENT SPECIFICATION

(11) **EP 4 060 972 B1**
(45) Date of publication and mention of the grant of the patent: **18.06.2025**
(21) Application number: 21195212.2
(22) Date of filing: 07.09.2021
(51) Int. Cl.: H04N 1/00, G06F 3/0482, G06F 16/54

(54) **INFORMATION PROCESSING DEVICE AND PROGRAM FOR DISPLAYING ENLARGED THUMBNAIL IMAGE**
INFORMATIONSVERARBEITUNGSVORRICHTUNG UND -PROGRAMM ZUR ANZEIGE EINES VERGRÖSSERTEN THUMBNAIL-BILDES
DISPOSITIF DE TRAITEMENT DE L'INFORMATION ET PROGRAMME D'AFFICHAGE D'UNE IMAGE MINIATURE AGRANDIE

(30) Priority: 17.03.2021 JP 2021043975
(43) Date of publication of application: 21.09.2022
(73) Proprietor: Fujifilm Business Innovation Corp., Tokyo 107-0052 (JP)
(72) Inventor: KUREBAYASHI, Makoto, Kanagawa, 220-8668 (JP)
(74) Representative: Meissner Bolte Partnerschaft mbB

(56) References cited:
- EP-A2- 2 490 111
- US-A1- 2003 081 011
- US-A1- 2013 057 914

## Description

### BACKGROUND

### Technical Field

The present invention relates to an information processing device and a program.

### Related Art

JP-A-2013-110488 discloses a preview image display device including: a document storage unit that stores document data; an object document data generation unit that generates document data for each object by dividing the document data into areas for each object; a preview image generation unit that generates only a preview image of the entire document or at least a preview image for each object based on either or both of the document data and the document data for each object; a display unit that displays the preview image; and a preview image control unit that causes the preview image generation unit to generate only the entire preview image or at least the preview image for each object based on a display size of the display unit and causes the display unit to display the preview image.

US2003/081011A1 discloses a GUI for displaying an enlarged preview image of each of the thumbnail images within a given folder, wherein a user may either select a thumbnail image from a film strip area, or by using control buttons for successively previewing each thumbnail iteratively in a forward and/or backward direction according to the thumbnails in the film strip. US2013/057914A1 similarly discloses a preview screen with a preview display unit and a thumbnail display unit, wherein the thumbnail image display unit displays a plurality of thumbnail images corresponding to the pages of a read document, and one image selected from the plurality of thumbnail images is enlarged and displayed as a preview image in the preview display unit. EP2490111A2 discloses a graphical user interface comprising a preview area for visualisation of an enlarged version of a thumbnail, and another thumbnail area 51 displaying the individual pages of a single document/file in the form of thumbnails. The enlarged thumbnail previewed is either the first page when the display program is launched, or the last thumbnail selected from among the plurality available that are selectable accumulatively by a user via touch gesture.

### SUMMARY

In a file management system, there is a technique of displaying a thumbnail image that is a reduced image such that contents of an image file or a document file can be confirmed before the image file or the document file is opened. Further, in order to confirm the contents of the file in detail, there is a technique of enlarging and displaying the thumbnail image. However, when plural thumbnail images are enlarged and displayed without being overlapped at the same time, each area where the thumbnail image is enlarged and displayed is smaller than an area where one thumbnail image is enlarged and displayed. In this case, since the area where the thumbnail image is enlarged and displayed becomes small, it becomes difficult for a user to confirm the thumbnail image.

Aspects of non-limiting embodiments of the present disclosure relate to displaying an enlarged thumbnail image in a size larger than that in a configuration in which plural enlarged thumbnail images are displayed without being overlapped at the same time.

The present invention is defined by the independent claims. The dependent claims define advantageous embodiments. Further aspects of the present invention will become apparent from the following description with reference to the attached drawings. Any "aspect","example" and "embodiment" of the description not falling within the scope of the claims does not form part of the invention and is provided for illustrative purposes only.

Hence, first, the enlarged thumbnail image can be displayed in a size larger than that in a configuration in which plural enlarged thumbnail images are displayed without being overlapped at the same time.

Second, the user can easily compare the plural thumbnail images as compared with a configuration in which one of plural enlarged thumbnail images is always displayed.

Third, the enlarged thumbnail image is prevented from being displayed in a small size.

Fourth, visibility of the enlarged thumbnail image can be improved.

Fifth, an image having a large amount of information can be easily confirmed.

Sixth, control can be performed according to an intention of the user as compared with a case where enlarged thumbnail images are bundled without depending on an instruction from the user.

Seventh, the file corresponding to the displayed enlarged thumbnail image can be grasped.

Eighth, the enlarged thumbnail images can be displayed in the order desired by the user as compared with a configuration in which an order of files for displaying enlarged thumbnail images is not determined by an instruction from the user.

Ninth, the user can easily grasp a file name corresponding to the displayed enlarged thumbnail image.

Tenth, complexity of an operation performed by the user can be reduced.

### BRIEF DESCRIPTION OF THE DRAWINGS

Exemplary embodiment(s) of the present invention will be described in detail based on the following figures, wherein:
Figs. 1A and 1B are views showing an example of an operation screen;
Fig. 2 is a diagram showing an example of a hardware configuration of an image display device to which the present exemplary embodiment is applied;
Fig. 3 is a block diagram showing an example of a functional configuration of the image display device;
Fig. 4 is a flowchart when the image display device receives an instruction to enlarge and display thumbnail images of plural files and displays enlarged thumbnail images;
Fig. 5 is a flowchart when a bundled display determination unit determines whether to display the enlarged thumbnail images in a bundled display mode;
Figs. 6A and 6B are views illustrating states in which a first enlarged thumbnail image is displayed;
Fig. 6C is a view showing a state in which an image for requesting an instruction of a user as to whether to bundle preview images is displayed;
Fig. 6D is a view showing a state in which the enlarged thumbnail images are displayed in the bundled display mode;
Fig. 6E is a view showing another example of an image for requesting an instruction of the user as to whether to bundle preview images;
Figs. 7A and 7B are views showing another example of display of the operation screen;
Fig. 8A is a view when plural files are selected as files whose enlarged thumbnail images are to be displayed; and
Fig. 8B is a table showing a relationship between a designated order and a display order of the files.

### DETAILED DESCRIPTION

### <Overview of Information Processing Device>

First, an overview of an image display device 1 to which a present exemplary embodiment is applied will be described.

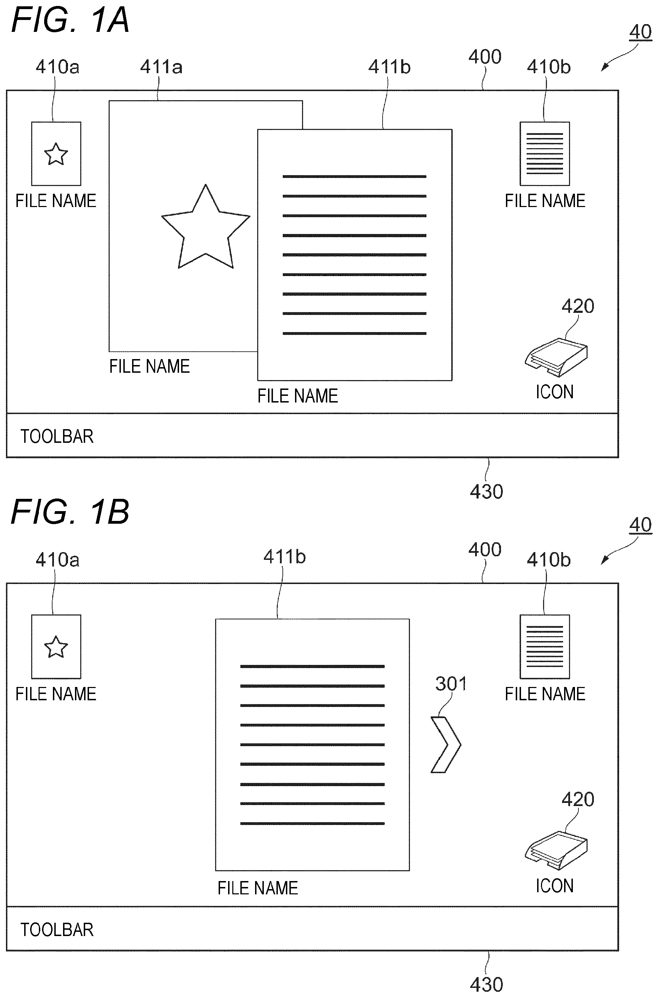

Figs. 1A and 1B are views showing an example of an operation screen.

As shown in Figs. 1A and 1B, a display 40 displays an operation screen 400. The operation screen 400 is a workspace on file handling software, and is an area where an image related to a file selected by a user, a thumbnail image 410 (described later) and the like are arranged. The file handling software is software that digitizes and manages files such as image data and document data, and has a function of promoting unified management of paper and electronic files.

Thumbnail images 410a, 410b, an icon 420, a toolbar 430, and enlarged thumbnail images 411a, 411b are displayed on the operation screen 400.

The icon 420 represents various functions such as a program function by a pictorial symbol. The tool bar 430 is a set of instruction units configured to receive an instruction from the user.

The thumbnail images 410a, 410b are images for confirming contents of files before opening the files, and the enlarged thumbnail images 411a, 411b are images obtained by enlarging the thumbnail images 410a, 410b.

The "file name" indicated below the thumbnail images 410a, 410b are names of the files respectively corresponding to the displayed enlarged thumbnail images for enabling the user to grasp which files are displayed as the enlarged thumbnail images.

The thumbnail images 410a, 410b are images for confirming at least a part of the contents of the files managed by the file handling software. For example, when a corresponding file is image data, the file is simply displayed as an image obtained by reducing an original image. When a corresponding file is document data of plural pages, the file is displayed as an image obtained by reducing a representative page such as a first page.

In the present exemplary embodiment, the thumbnail images 410a, 410b function as icons for opening corresponding files. For example, by performing a specific operation such as a double click operation on the thumbnail images 410a, 410b, the corresponding file is opened.

The enlarged thumbnail images 411a, 411b are images obtained by enlarging the thumbnail images 410a, 410b instructed to be enlarged by the user, and are displayed without newly starting a program. It is assumed that the enlarged thumbnail image 411 is enlarged and displayed to a size that allows the user to understand the contents of the thumbnail image 410. More specifically, it is assumed that the thumbnail image 411 is displayed larger than the corresponding thumbnail image 410. Hereinafter, an image obtained by enlarging and displaying a thumbnail image may be referred to as an enlarged thumbnail image. A size of the enlarged thumbnail image to be displayed may be determined, for example, according to an amount of data of an original image of the thumbnail image.

When the thumbnail images 410 of plural files are enlarged and displayed, there are two display modes of the thumbnail images to be enlarged and displayed, and there are an individual display mode and a bundled display mode.

Here, the individual display mode is a display mode in which, when enlarged thumbnail images of plural files are displayed, the enlarged thumbnail images are individually displayed for each file. That is, the enlarged thumbnail images of the plural files are displayed on a UI screen for each file. A display mode of the enlarged thumbnail images 411a, 411b displayed in Fig. 1A is the individual display mode.

The bundled display mode is a display mode in which enlarged thumbnail images of plural files are displayed as if like one file in a pseudo manner. In other words, when an instruction to display the enlarged thumbnail images of the plural files is received, the enlarged thumbnail images of the plural files are bundled and displayed, and one enlarged thumbnail image among the enlarged thumbnail images of the plural files is displayed in the pseudo manner. Fig. 1B is an example of the enlarged thumbnail images displayed in the bundled display mode. In Fig. 1B, the enlarged thumbnail images 411a, 411b displayed in the individual display mode in Fig. 1A are displayed in the bundled display mode. The enlarged thumbnail image 411b is displayed, and the enlarged thumbnail image 411a is not displayed. A page turning button 301 is displayed on a right side of the enlarged thumbnail image 411b. The page turning button 301 is a display for changing display of the enlarged thumbnail images displayed in the bundled display mode. When the page turning button 301 is pressed, the enlarged thumbnail image to be displayed is changed from the enlarged thumbnail image 411b to the enlarged thumbnail image 411a of another file.

Hereinafter, an exemplary embodiment of the present disclosure will be described in detail with reference to the accompanying drawings.

### <Hardware configuration of image display device 1>

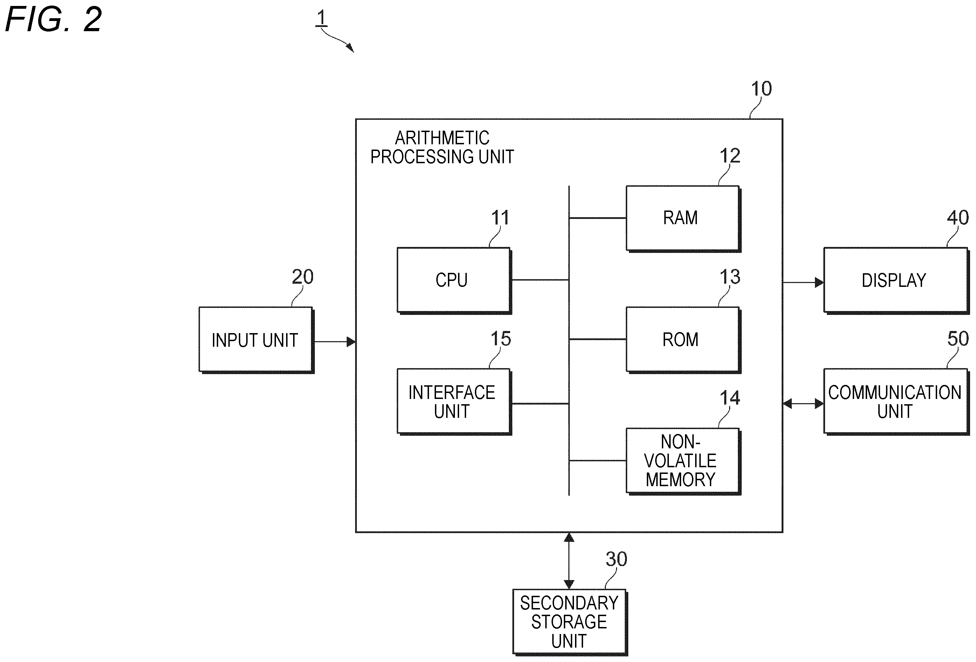

Fig. 2 is a diagram showing an example of a hardware configuration of the image display device 1 to which the present exemplary embodiment is applied.

As shown in Fig. 2, the image display device 1 according to the present exemplary embodiment functions as an example of an information processing device, and includes an arithmetic processing unit 10 that executes digital arithmetic processing according to a predetermined processing program during screen display, an input unit 20 that receives an input operation from the user, a secondary storage unit 30 realized by a hard disk drive (HDD), a display 40 including a liquid crystal display panel, an organic electro-luminescence (EL) display panel or the like that displays an image, text information or the like to the user, and a communication unit 50 that transmits and receives data via a network.

The arithmetic processing unit 10 includes a central processing unit (CPU) 11 that controls the entire device as an example of a processor, a random access memory (RAM) 12 that is used as a working memory or the like of the CPU 11, a read only memory (ROM) 13 that stores an image display processing program or the like executed by the CPU 11, a non-volatile memory 14 such as a static RAM (SRAM) or a flash memory backed up by a battery, which is rewritable and configured to hold data even when power supply is interrupted, and an interface unit 15 that controls each unit such as the input unit 20 connected to the arithmetic processing unit 10. The nonvolatile memory 14 stores image information such as thumbnail images (described later) displayed on the display 40.

In addition to storing image data and the like, the secondary storage unit 30 stores an image display processing program executed by the arithmetic processing unit 10, and the arithmetic processing unit 10 reads the image display processing program, whereby various types of processing of the image display device 1 according to the present exemplary embodiment is executed.

Here, the program executed by the CPU 11 that is an example of the processor is provided to the arithmetic processing unit 10 in a state of being stored in a computer-readable recording medium such as a magnetic recording medium (a magnetic tape, a magnetic disk or the like), an optical recording medium (an optical disk or the like), a magneto-optical recording medium, or a semiconductor memory. The program executed by the CPU 11 may be downloaded to the image display device 1 using a communication unit such as the Internet.

In the exemplary embodiments, the term "processor" refers to hardware in a broad sense. Examples of the processor include general processors (e.g., CPU: Central Processing Unit), and dedicated processors (e.g., GPU: Graphics Processing Unit, ASIC: Application Specific Integrated Circuit, FPGA: Field Programmable Gate Array, and programmable logic device).

In the exemplary embodiments, the term "processor" is broad enough to encompass one processor or plural processors in collaboration which are located physically apart from each other but may work cooperatively. The order of operations of the processor is not limited to one described in the exemplary embodiments above, and may be changed.

The input unit 20 is a device such as a pointing device for the user to input an operation.

For example, when the input unit 20 is a mouse or the like, the user may designate a position, a displayed image or the like on the screen of the display 40 by performing a moving operation or a click operation on a cursor.

When the input unit 20 is a touch panel or the like, the user may designate a position or a displayed image on the screen by performing an operation of bringing a finger or the like into contact with the touch panel or an operation of maintaining a state in which the finger or the like is in contact with the touch panel for a time longer than a predetermined time. In this case, the input unit 20 is provided integrally with the display 40.

In addition to the device such as the above-described pointing device, a keyboard or the like that performs a key input operation may be provided as the input unit 20.

### <Functional Configuration of Image Display Device 1>

Next, a functional configuration of the image display device 1 will be described.

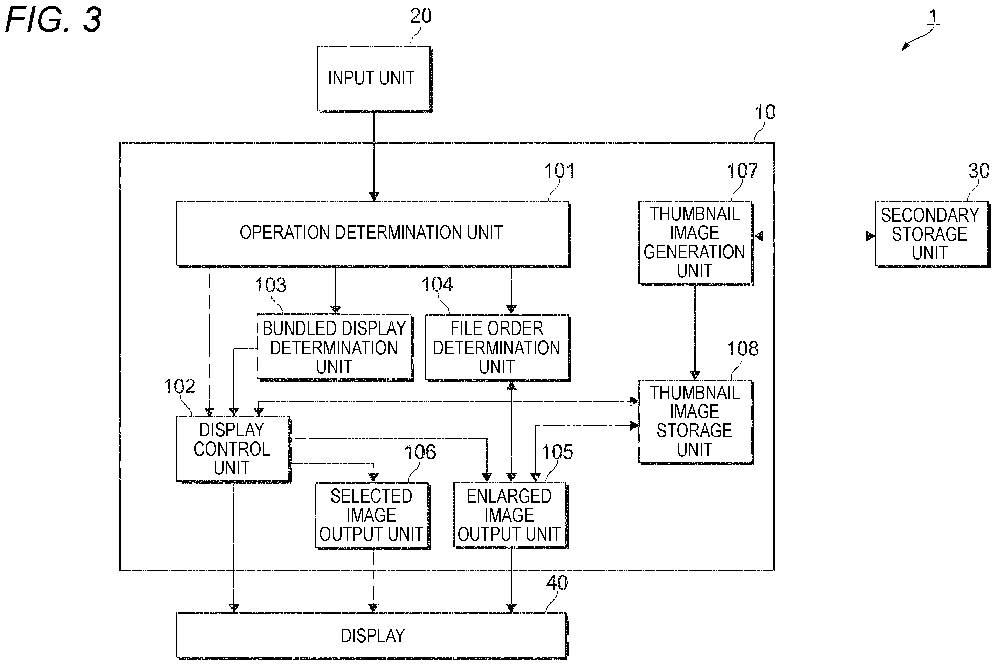

Fig. 3 is a block diagram showing an example of a functional configuration of the image display device 1. The image display device 1 is realized by the arithmetic processing unit 10 (see Figs. 1A and 1B), and includes an operation determination unit 101, a display control unit 102, a bundled display determination unit 103, a file order determination unit 104, an enlarged image output unit 105, a selected image output unit 106, a thumbnail image generation unit 107, and a thumbnail image storage unit 108.

The operation determination unit 101 is configured to determine whether a user operation via the input unit 20 has been performed on the operation screen 400 (see Figs. 1A and 1B). The user operation is, for example, an operation of designating an image, an icon, a position or the like on the operation screen 400, a scroll operation, or a key input operation.

The display control unit 102 controls display modes and positions of an image, the icon 420, the tool bar 430 (see Figs. 1A and 1B) and the like based on contents determined by the operation determination unit 101. The thumbnail image 410 is captured from the thumbnail image storage unit 108 and is controlled to be displayed as an icon for opening a corresponding file.

When the operation determination unit 101 receives an instruction to display enlarged thumbnail images of plural files, the bundled display determination unit 103 determines a display mode of the enlarged thumbnail images as to whether the enlarged thumbnail images are collectively displayed.

The file order determination unit 104 determines an order of files to be displayed when the enlarged thumbnail images are displayed in a bundled display mode. The order of files may be received from the user or may be determined based on a predetermined order. Here, examples of the predetermined order include an order in which, among the plural files for which an instruction to enlarge and display the thumbnail image is received, the file for which the instruction is received later becomes backward in order, an order determined based on a position where the thumbnail image of the file is displayed, an order determined based on a name of the file, and the like.

The enlarged image output unit 105 displays the enlarged thumbnail images on the UI screen based on an instruction from the display control unit 102. The enlarged image output unit 105 enlarges and displays the thumbnail image stored in the thumbnail image storage unit 108 without newly starting the program. When an instruction to change the enlarged thumbnail image is received in a case where the enlarged thumbnail image is displayed in the bundled display mode, the enlarged thumbnail image is displayed on the display 40 (see Fig. 2) based on the order of files determined by the file order determination unit 104.

When an instruction to enlarge and display the thumbnail images of the plural files is given, the selected image output unit 106 displays an image for selecting the display mode of the enlarged thumbnail images on the display 40.

The thumbnail image generation unit 107 generates the thumbnail image 410 displayed on the operation screen 400 based on a file such as image data stored in the secondary storage unit 30. When the file has plural pages, the thumbnail image generation unit 107 generates a thumbnail image for each page.

The thumbnail image storage unit 108 acquires and stores the thumbnail image 410 generated by the thumbnail image generation unit 107. The thumbnail image storage unit 108 is realized by the non-volatile memory 14 (see Fig. 2).

### <Processing of Information Processing Device>

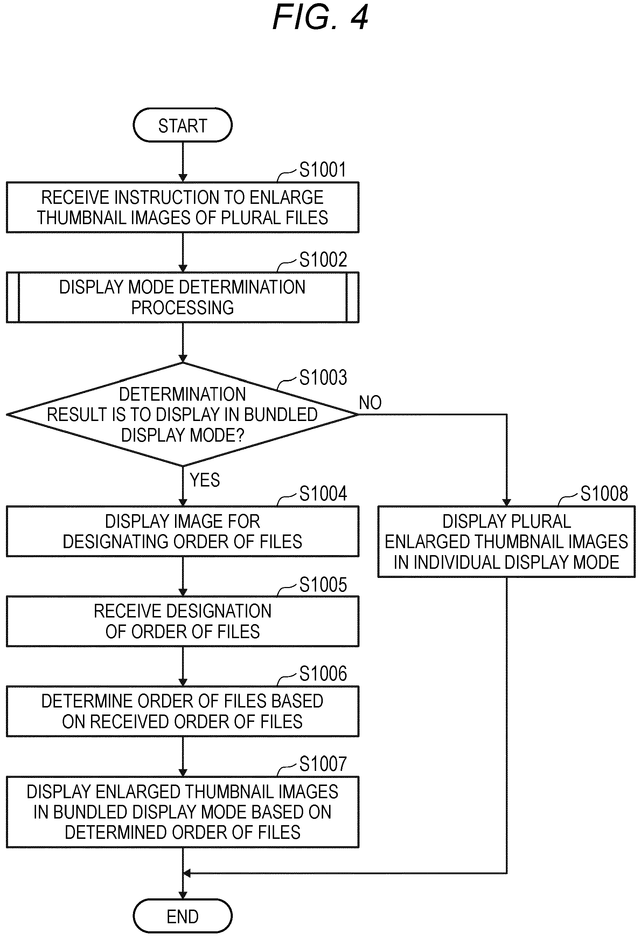

Next, processing performed by the image display device 1 will be described. Fig. 4 is a flowchart when the image display device 1 receives an instruction to enlarge and display thumbnail images of plural files and displays enlarged thumbnail images. First, the operation determination unit 101 receives an instruction to enlarge and display the thumbnail images of the plural files (step 1001). An example of the instruction to enlarge and display the thumbnail images of the plural files is an instruction to enlarge and display the thumbnail images of other files when the thumbnail image of one file is already enlarged and displayed.

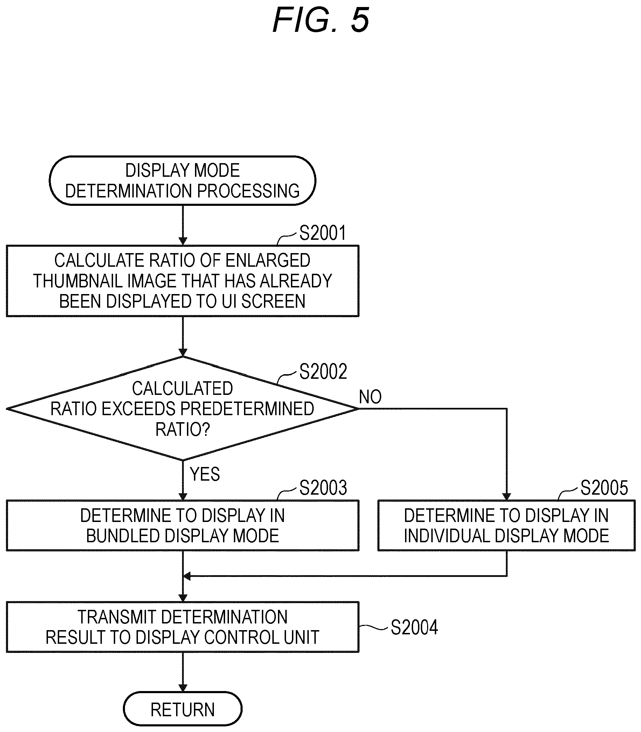

Next, the bundled display determination unit 103 determines whether to display in a bundled display mode (step 1002). Display mode determination processing of step 1002 will be described later in detail with reference to Fig. 5. When the bundled display determination unit 103 determines "not to display in the bundled display mode" (NO in step 1003), the enlarged image output unit 105 enlarges and displays the plural thumbnail images in an individual display mode (step 1008), and the processing ends. In step 1003, when the bundled display determination unit 103 determines "to display in the bundled display mode" (YES in step 1003), the display control unit 102 performs control to display an image for designating an order of files (step 1004). Then, when the operation determination unit 101 receives designation of the order of files from the user (step 1005), the file order determination unit 104 determines the order of files of the enlarged thumbnail images displayed in the bundled display mode based on the received order of files (step 1006). Thereafter, the enlarged image output unit 105 displays the enlarged thumbnail images in the bundled display mode based on the determined order of files (step 1007), and the processing ends.

In the present exemplary embodiment, as described above, the file order determination unit 104 determines the order of files of the enlarged thumbnail images to be displayed based on the order of files received by the operation determination unit 101 from the user. However, the order of files may be determined not only based on an instruction from the user but also based on, for example, display positions of the plural files on the UI screen, or may be determined based on an order of names of the plural files.

Next, the display mode determination processing performed by the bundled display determination unit 103 in step 1002 in Fig. 4 will be described.

Fig. 5 is a flowchart of processing in which the bundled display determination unit 103 determines whether to display the enlarged thumbnail images in the bundled display mode.

The bundled display determination unit 103 calculates a ratio of area of the enlarged thumbnail image that has already been displayed to the UI screen (step 2001). When it is determined whether the calculated ratio exceeds a predetermined ratio (step 2002), and it is determined that the calculated ratio exceeds the predetermined ratio (YES in step 2002), it is determined to display in the bundled display mode (step 2003). Then, "to display in the bundled display mode" is transmitted to the display control unit 102 as a determination result (step 2004), and the processing ends.

In step 2002, when the bundled display determination unit 103 determines that the calculated ratio does not exceed the predetermined ratio (NO in step 2002), the bundled display determination unit 103 determines to display in the individual display mode (step 2005). Then, "to display in the individual display mode" is transmitted to the display control unit 102 as a determination result (step 2004), and the processing ends.

In the present exemplary embodiment, as a condition for determining whether to display in the bundled display mode, the ratio of the enlarged thumbnail image that has already been displayed to the UI screen is used. However, as a condition for determining whether to display in the bundled display mode, it is possible to use a condition such as displaying in the bundled display mode in a case where the enlarged thumbnail images overlap each other when the enlarged thumbnail images are displayed in the individual display mode. It is also possible to allow the user to select a display mode.

### <First Display Example Of UI Screen>

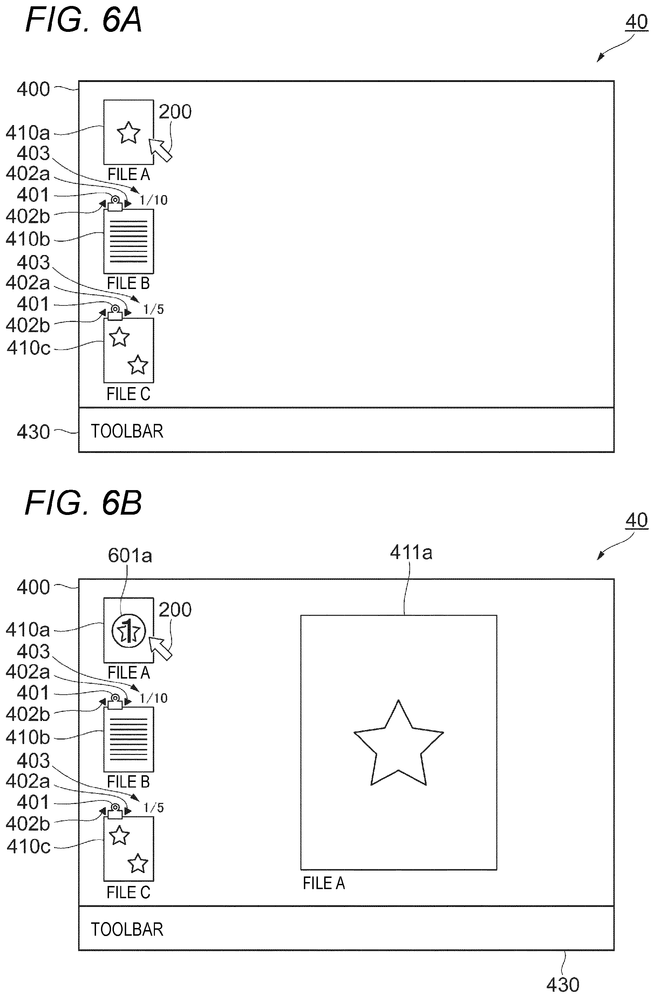

Next, an example of the operation screen will be described with reference to Figs. 6A to 6E.

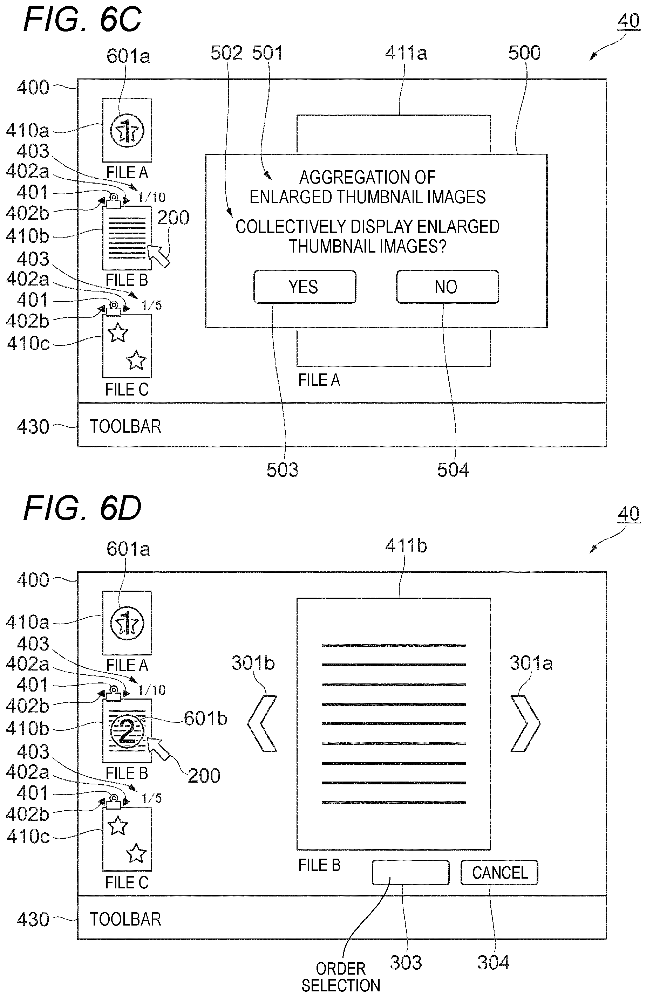

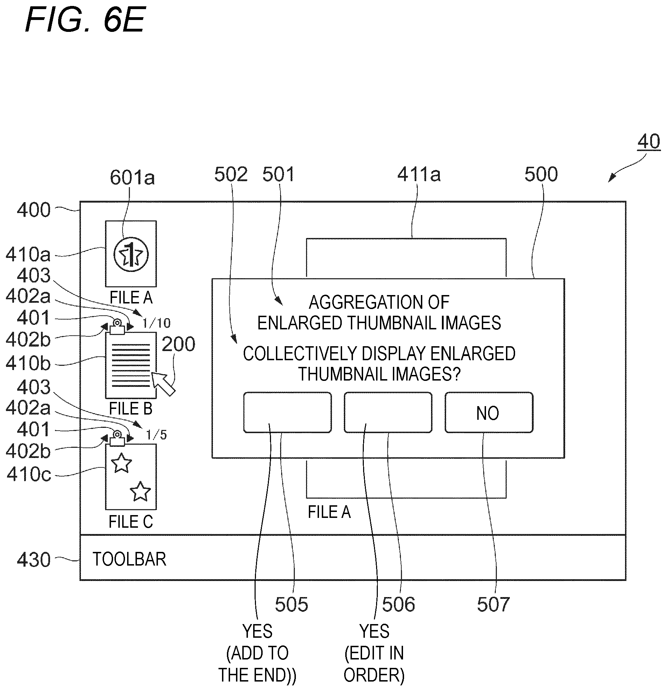

Figs. 6A and 6B are views showing a state in which a first enlarged thumbnail image is displayed. Fig. 6C is a view showing a state in which an image for requesting an instruction of the user as to whether to bundle preview images is displayed, and Fig. 6D is a view showing a state in which the enlarged thumbnail images are displayed in the bundled display mode. Fig. 6E is a view showing another example of an image for requesting an instruction of the user as to whether to bundle preview images.

Fig. 6A shows a state before thumbnail images 410a, 410b, 410c are designated. In Fig. 6A, a cursor 200, the thumbnail images 410a, 410b, 410c, and the tool bar 430 are displayed. Hereinafter, the thumbnail images 410a, 410b, 410c may be collectively referred to as the thumbnail image 410. In a lower part of the thumbnail image 410, there is a field for displaying a name of a file corresponding to the thumbnail image 410. In a case where the file has plural pages, a mark 401 imitating a clip is displayed at an upper left portion of the thumbnail image, and a page display 403 indicating the number of all pages and a page number is displayed at an upper right portion thereof. For example, a file name "file B" is displayed at a bottom portion of the thumbnail image 410b. A mark representing a shape of a clip indicating that a file has plural pages is displayed at the upper left portion. Further, "10", which is the number of all pages, and "1", which is a page number corresponding to the displayed thumbnail image 410b, are shown as "1/10" at the upper right portion of the thumbnail image 410b.

Triangular thumbnail turning icons 402a, 402b are displayed on left and right sides of the mark 401 imitating the shape of the clip, and when the page turning icon 402a or 402b is operated, the operation determination unit 101 (see Fig. 3) determines an instruction to change a page of the displayed thumbnail image 410, and the display control unit 102 (see Fig. 3) performs control to change the page of the thumbnail image 410. Specifically, when the triangular icon 402a on the right side of the mark imitating the shape of the clip is clicked, the displayed thumbnail image is changed to a thumbnail image of the next page. When the triangular page turning icon 402b on the left side is clicked, the thumbnail image is changed to the thumbnail image 410 of the previous page.

Fig. 6B shows a state in which a thumbnail image is designated and an enlarged thumbnail image is displayed.

In Fig. 6B, in addition to Fig. 6A, the enlarged thumbnail image 411a obtained by enlarging the thumbnail image 410a is displayed. In Fig. 6B, as a mark displaying the enlarged thumbnail image 411a obtained by enlarging the thumbnail image 410a, a sequence symbol 601a having 1 in a circle is displayed so as to be superimposed on the thumbnail image 410a.

Fig. 6C shows a state in which an instruction to enlarge and display the thumbnail image 410b is given on a screen in Fig. 6B, and a selection as to whether to display the enlarged thumbnail images in the bundled display mode is displayed.

In Fig. 6C, in addition to display of Fig. 6B, an image 500 for requesting an instruction of the user as to whether to display the enlarged thumbnail images in the bundled display mode is displayed. In the image 500 for requesting the instruction, "<Aggregation of enlarged thumbnail images>" is displayed in a title field 501 at an upper center portion, and a message "Collectively display enlarged thumbnail images?" is displayed in a message field 502 below the title field 501 . Further below, two buttons for instructing the user are displayed, "Yes" is displayed in a button 503 for instructing to bundle the enlarged thumbnail images, and "No" is displayed in a button 504 for instructing to individually display the enlarged thumbnail images. By selecting the displayed buttons 503, 504 by the user, the instruction as to whether to display the enlarged thumbnail images in the bundled display mode may be easily given.

Fig. 6D shows a state in which the thumbnail images 410a, 410b are displayed in the bundled display mode. The sequence symbol 601a having 1 in the circle is displayed so as to be superimposed on the thumbnail image 410a, and a sequence symbol 601b having 2 in a circle is displayed so as to be superimposed on the thumbnail image 410b. A number in the circle indicates the order of files in the enlarged thumbnail image displayed in the bundled display mode. A page turning button 301a for turning forward a page and a page turning button 301b for turning back the page are displayed on left and right sides of the enlarged thumbnail image 411b. The page and file whose enlarged thumbnail image is displayed may be changed with the page turning buttons 301a, 301b.

A button 303 indicating "order selection" and a button 304 indicating "cancel" are displayed on a lower right side of the enlarged thumbnail image displayed in the bundled display mode. When the button 303 is pressed, the order of files of the enlarged thumbnail images displayed in the bundled display mode may be changed. For example, display of the symbols superimposed on the thumbnail images 410a, 410b disappears. Then, the user newly selects the order of files. When the button 304 is pressed, display of the enlarged thumbnail image disappears.

Fig. 6E show an image for requesting an instruction of the user as to whether to bundle preview images when an instruction to display enlarged thumbnail images of three or more files is given.

In Fig. 6E, the image 500 for requesting an instruction of the user as to whether to bundle preview images is displayed, "Yes (add to the end)" is displayed in a button 505 for instructing to bundle the enlarged thumbnail images, "Yes (edit in order)" is displayed in a button 506 for instructing to bundle the enlarged thumbnail images, and "No" is displayed in a button 507 for instructing to individually display the enlarged thumbnail images. When the button 505 displayed as "Yes (add to the end)" is pressed, the enlarged thumbnail images are displayed in the bundled display mode in which the file for which the instruction to display the enlarged thumbnail image is given last becomes last in the order of files. Thereby, the user may instruct processing of adding a new enlarged thumbnail image to the end without designating the order of files. When the button 506 displayed as "Yes (edit in order)" is pressed, the user may designate the order of files, and bundle and display the enlarged thumbnail images of different files.

### <Second Display Example Of UI Screen>

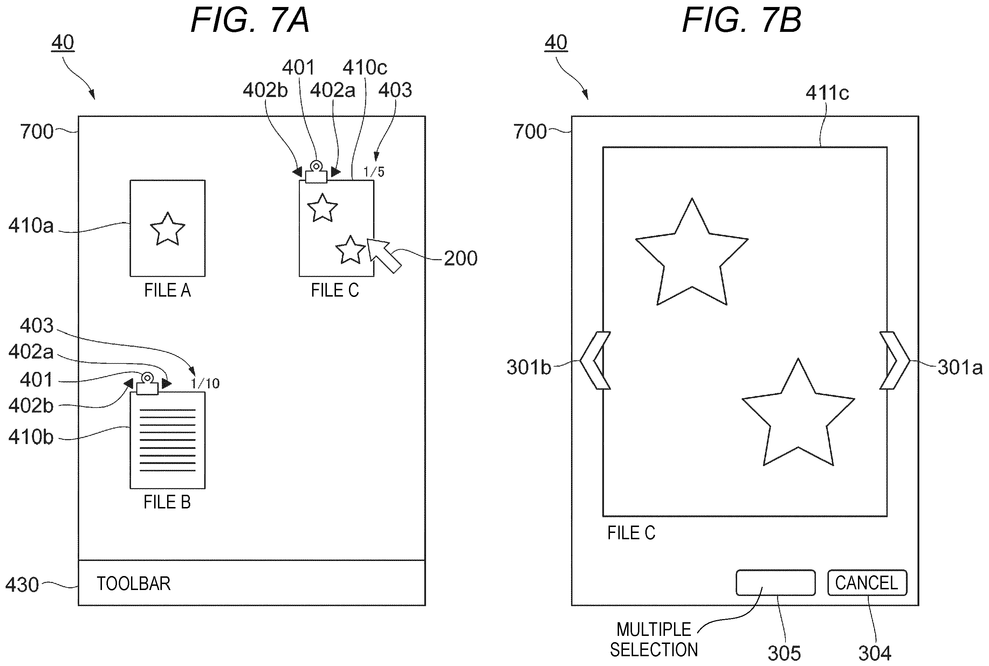

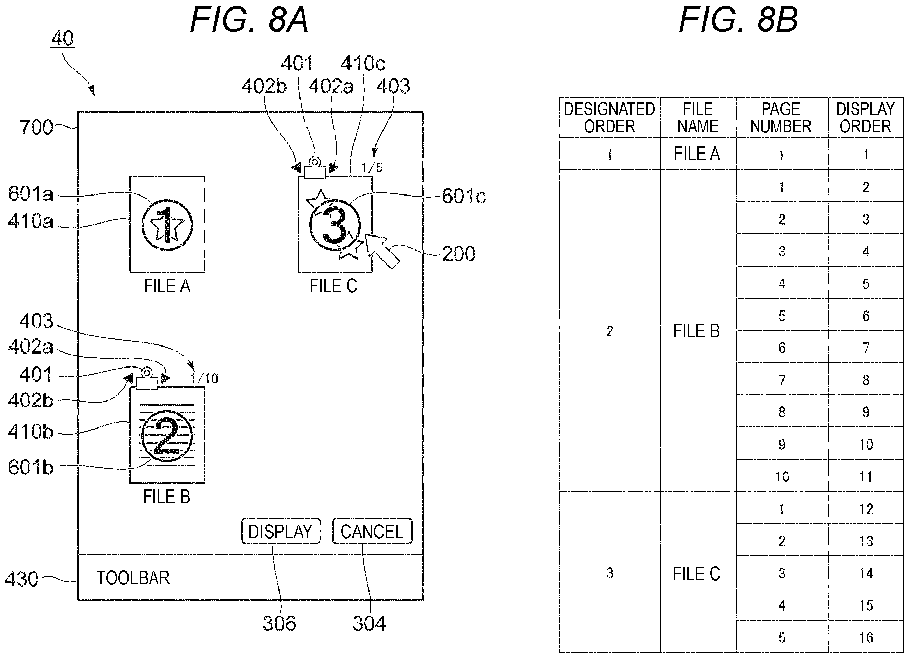

Next, another example of the operation screen will be described with reference to Figs. 7A, 7B, 8A and 8B.

Figs. 7A and 7B are views showing another example of display of the operation screen. Fig. 7A is a view showing a state in which a thumbnail image is selected. Fig. 7B is a view showing a state in which a selected thumbnail image is enlarged and displayed. Fig. 8A is a view when plural files are selected as files whose enlarged thumbnail images are to be displayed, and Fig. 8B is a table showing a relationship between a designated order and a display order of the files.

In Fig. 7A, the display 40 according to the present exemplary embodiment displays an operation screen 700. In a second display example, the same components as those in the first display example are denoted by the same reference numerals, and detailed description thereof will be omitted. On the operation screen 700, the cursor 200 pointing at a position, an image or the like on the screen, the thumbnail image 410, and the toolbar 430 are displayed.

In Fig. 7B, the display 40 according to the present exemplary embodiment displays an enlarged thumbnail image 411c of the thumbnail image 410c in Fig. 7A, the page turning button 301a for turning forward a page of the displayed enlarged thumbnail image, and the page turning button 301b for turning backward the page. With the page turning buttons 301a, 301b, the page and file whose enlarged thumbnail image is displayed may be changed. A "multiple selection" button 305 for enlarging and displaying thumbnail images of plural files, and a "cancel" button 304 for ending display of the enlarged thumbnail images are displayed.

In the second display example, the enlarged thumbnail image 411 is controlled to be displayed over the entire display screen.

### <Screen For Selecting Plural Files Whose Enlarged Thumbnail Images Are To Be Displayed>

Fig. 8A shows a screen that is displayed when the multiple selection button 305 is pressed in Fig. 7B and that is used to sequentially select files whose thumbnail images are to be displayed. Fig. 8B is a table showing a display order of the enlarged thumbnail images when the order of files is designated.

In Fig. 8A, the user gives an instruction to display the preview images in an order of file names "file A", "file B" and "file C". Here, the thumbnail image 410 is displayed in the same manner as in Fig. 7A, and a button 306 indicating "display" and the button 304 indicating "cancel" are displayed on a lower right side. Then, sequence symbols 601a, 601b, 601c are displayed on the thumbnail images in an order in which the user selects the files. When the button 306 indicating "display" is clicked, the order of files is determined, and the enlarged thumbnail images of the plural files are displayed in the bundled display mode. When the button 304 indicating "cancel" is pressed, a screen shifts to a screen on which the thumbnail image as shown in Fig. 7A is displayed.

### <Example Of Determination of Display Order>

The table of Fig. 8B shows "designated order", "file name", "page number", and "display order". Here, the "designated order" represents the order of files designated by the user. The "file name" corresponding to the designated order is shown on a line the same as that of the designated order. The "page number" is a page number determined for each file. The "display order" is an order determined through the plural files displayed in the bundled display mode.

Here, an example of a correspondence relationship between the designated order and the display order of the plural files displayed in the bundled display mode will be described.

In the designated order of files, a first page of a first file is set to "1" in the display order, and a next page of the first file is set to "2" in the display order. When the display order is associated up to a last page of the file, the next in the display order is associated with a first page of a file next in the designated order. In this way, the display order is associated with the pages of all the designated files.

Specifically, in the table in Fig. 8B, a page number 1 of the file name "file A" is associated with "1" in the display order. Since the file of "file A" has only one page, a first page of the file of "file B", which is a second file in the designated order, is associated with "2" in the display order. In addition, "3" to "11" in the display order are associated with second to tenth pages of the file of "file B", respectively. Further, "12" to "16" in the display order are associated with first to fifth pages of the file of "file C", respectively.

Here, an operation in a case where an instruction, to change a page of the preview image displayed in the bundled display mode in which the display order is determined as described above, is given will be described. For example, in a case where the page turning button 301a is selected when an image whose display order is "1", that is, the first page of the "file A" is displayed as the preview image, an image whose display order is "2", that is, an enlarged thumbnail image of the first page of the "file B" is displayed. In a case where the page turning button 301b is selected when the image whose display order is "1", that is, the first page of the "file A" is displayed, the preview image of the fifth page of the "file C" whose display order is "16", which is the last in the display order, is displayed. Here, the last in the display order, "16", is adopted as the display order immediately before the display order "1".

Although the exemplary embodiment of the present invention has been described above, the technical scope of the present invention is not limited to the above-described exemplary embodiment. For example, in the above-described exemplary embodiment, the enlarged thumbnail image is changed page by page when the page turning button is clicked. However, two buttons, "page turning" button and a "file changing" button, may be displayed, and when the "file changing" button is clicked, an enlarged thumbnail image of the next file may be displayed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. An information processing device (1) comprising a processor (11) configured to:
display a plurality of thumbnail images (410) each representing one of a plurality of files on a screen (40, 400);
receive an enlargement instruction for a file among the plurality of files to display an enlarged thumbnail image (411) for the file, the enlarged thumbnail image being an image obtained by enlarging the thumbnail image (410);
bundle, in response to receiving enlargement instructions for two or more files among the plurality of files (1001), the enlarged thumbnail images of the two or more files into a single multi-page enlarged thumbnail comprising a page for each of the two or more files, and display one page of the multi-page enlarged thumbnail as the enlarged thumbnail image together with one or more page turning buttons (301) which, with user selection, enable to turn forward or back through the pages of the multi-page enlarged thumbnail receive, via the one or more page turning buttons, a change instruction to display an enlarged thumbnail image of another page corresponding to one file among the plurality of files; and
display the enlarged thumbnail image of the another page instead of the enlarged thumbnail image of the one file.

2. The information processing device according to claim 1, wherein, in response to receiving the enlargement instruction for the plurality of files, the processor is configured to display the enlarged thumbnail image of the one file among the plurality of files in a case where a predetermined condition is satisfied.

3. The information processing device according to claim 2, wherein the predetermined condition is a condition determined based on an area in which an enlarged thumbnail image of each of the plurality of files is displayed.

4. The information processing device according to claim 3, wherein the condition determined based on the area is satisfied in a case where an area in which an enlarged thumbnail image is to be displayed based on the enlargement instructions for the plurality of files overlaps another area in which another enlarged thumbnail image is to be displayed based on the enlargement instructions for the plurality of files.

5. The information processing device according to either claim 3 or claim 4, wherein the area is determined according to a data amount of an original image corresponding to each of the enlarged thumbnail images.

6. The information processing device according to any of the preceding claims, in particular claim 2, wherein the predetermined condition is satisfied in a case where the instruction to display an enlarged thumbnail image of the one file among the plurality of files is received from a user.

7. The information processing device according to any of the preceding claims, in particular claim 1, wherein the another file is determined among the plurality of files for which the enlargement instruction is received according to a predetermined order that is determined for the plurality of files for which the enlargement instruction is received.

8. The information processing device according to any of the preceding claims, in particular claim 7, wherein the predetermined order is determined by an instruction from a user.

9. The information processing device according to any of the preceding claims, in particular claim 1, wherein the processer is configured to display information indicating a file corresponding to the displayed enlarged thumbnail image together with the enlarged thumbnail image.

10. An information processing device (1) comprising a processor (11) configured to:
display a plurality of thumbnail images (410) each representing one of a plurality of files on a screen (40, 400), respectively;
in response to an enlargement instruction to display an enlarged thumbnail image obtained by enlarging the thumbnail image for two or more of said files (1001), display information for allowing a user to select whether to bundle enlarged thumbnail images of said two or more files (501-504); and,
in response to a selection of bundling the enlarged thumbnail images of the two or more files by the user, bundle the enlarged thumbnail images of the two or more files, into a single multi-page enlarged thumbnail comprising a page for each selected file and display one page of the multi-page enlarged thumbnail as the enlarged thumbnail image(1007).

11. The information processing device according to claim 10, wherein, in response to the selection of bundling the enlarged thumbnail images of the two or more files by the user, the processor is configured to display information for designating an order in which the enlarged thumbnail images of the two or more files are displayed.

12. A program causing a computer to execute a process, the process comprising:
displaying a plurality of thumbnail images each representing one of a plurality of files on a screen;
receiving an enlargement instruction for a file among the plurality of files to display an enlarged thumbnail image for the file, the enlarged thumbnail image being an image obtained by enlarging the thumbnail image;
bundling, in response to receiving enlargement instructions for two or more files amongst the plurality of files, the enlarged thumbnail images of the two or more files into a single multi-page enlarged thumbnail comprising a page for the two or more files, and
displaying one page of the multi-page enlarged thumbnail as the enlarged thumbnail image together with one or more page turning buttons which, with user selection, enable to turn forward or back through pages included in the multi-page enlarged thumbnail; and
receiving, via the one or more page turning buttons, a change instruction to display an enlarged thumbnail image of another page corresponding to one file among the plurality of files and
displaying the enlarged thumbnail image of the another page instead of the enlarged thumbnail image of the one file.

## Patentansprüche

1. Informationsverarbeitungsvorrichtung (1), umfassend einen Prozessor (11), der so konfiguriert ist, dass er:
mehrere Vorschaubilder (410), die jeweils eine von mehreren Dateien darstellen, auf einem Bildschirm (40, 400) anzeigt;
eine Vergrößerungsanweisung für eine Datei unter den mehreren Dateien zum Anzeigen eines vergrößerten Vorschaubildes (411) für die Datei empfängt, wobei das vergrößerte Vorschaubild ein Bild ist, das durch Vergrößern des Vorschaubildes (410) erhalten wird;
als Reaktion auf Empfangen von Vergrößerungsanweisungen für zwei oder mehr Dateien unter den mehreren Dateien (1001) die vergrößerten Vorschaubilder der zwei oder mehr Dateien in eine einzelne mehrseitige vergrößerte Vorschau, die eine Seite für jede der zwei oder mehr Dateien umfasst, bündelt und eine Seite der mehrseitigen vergrößerten Vorschau als das vergrößerte Vorschaubild zusammen mit einer oder mehreren Seitenumblättertasten (301), die mit Benutzerauswahl ermöglichen, durch die Seiten der mehrseitigen vergrößerten Vorschau vorwärts oder rückwärts umzublättern, anzeigt;
via die eine oder mehreren Seitenumblättertasten eine Änderungsanweisung zum Anzeigen eines vergrößerten Vorschaubildes einer anderen Seite, die einer Datei entspricht, unter den mehreren Dateien, empfängt; und
das vergrößerte Vorschaubild der anderen Seite anstelle des vergrößerten Vorschaubilds der einen Datei anzeigt.

2. Informationsverarbeitungsvorrichtung nach Anspruch 1, wobei der Prozessor als Reaktion auf Empfangen der Vergrößerungsanweisung für die mehreren Dateien so konfiguriert ist, dass er das vergrößerte Vorschaubild der einen Datei unter den mehreren Dateien in einem Fall, in dem eine vorbestimmte Bedingung erfüllt ist, anzeigt.

3. Informationsverarbeitungsvorrichtung nach Anspruch 2, wobei die vorbestimmte Bedingung eine Bedingung ist, die basierend auf einem Bereich bestimmt wird, in dem ein vergrößertes Vorschaubild von jeder der mehreren Dateien angezeigt wird.

4. Informationsverarbeitungsvorrichtung nach Anspruch 3, wobei die Bedingung, die basierend auf einem Bereich bestimmt wird, in einem Fall, in dem ein Bereich, in dem ein vergrößertes Vorschaubild angezeigt werden soll, basierend auf der Vergrößerungsanweisungen für die mehreren Dateien mit einem anderen Bereich, in dem ein anderes vergrößertes Vorschaubild angezeigt werden soll, basierend auf der Vergrößerungsanweisungen für die mehreren Dateien überlappt, erfüllt ist.

5. Informationsverarbeitungsvorrichtung nach Anspruch 3 oder Anspruch 4, wobei der Bereich gemäß einer Datenmenge eines Originalbildes, das jedem der vergrößerten Vorschaubilder entspricht, bestimmt wird.

6. Informationsverarbeitungsvorrichtung nach einem der vorhergehenden Ansprüche, insbesondere Anspruch 2, wobei die vorbestimmte Bedingung in einem Fall, in dem die Anweisung, ein vergrößertes Vorschaubild der einen Datei unter den mehreren Dateien anzuzeigen, von einem Benutzer empfangen wird, erfüllt ist.

7. Informationsverarbeitungsvorrichtung nach einem der vorhergehenden Ansprüche, insbesondere Anspruch 1, wobei die andere Datei unter den mehreren Dateien, für die die Vergrößerungsanweisung empfangen wird, gemäß einer vorbestimmten Reihenfolge, die für die mehreren Dateien, für die die Vergrößerungsanweisung empfangen wird, bestimmt ist, bestimmt wird.

8. Informationsverarbeitungsvorrichtung nach einem der vorhergehenden Ansprüche, insbesondere Anspruch 7, wobei die vorbestimmte Reihenfolge durch eine Anweisung von einem Benutzer bestimmt wird.

9. Informationsverarbeitungsvorrichtung nach einem der vorhergehenden Ansprüche, insbesondere Anspruch 1, wobei der Prozessor so konfiguriert ist, dass er Informationen, die eine Datei angeben, die dem angezeigten vergrößerten Vorschaubild entspricht, zusammen mit dem vergrößerten Vorschaubild anzeigt.

10. Informationsverarbeitungsvorrichtung (1), umfassend einen Prozessor (11), der so konfiguriert ist, dass er:
mehrere Vorschaubilder (410), die jeweils eine von mehreren Dateien darstellen, auf einem Bildschirm (40, 400) anzeigt;
als Reaktion auf eine Vergrößerungsanweisung, um ein vergrößertes Vorschaubild, das durch Vergrößern des Vorschaubildes erhalten wird, für zwei oder mehr der genannten Dateien (1001) anzuzeigen, Anzeigeinformationen zum Ermöglichen eines Benutzers, auszuwählen, ob vergrößerte Vorschaubilder der genannten zwei oder mehr Dateien (501-504) zu bündeln sind; und,
als Reaktion auf eine Auswahl des Bündelns der vergrößerten Vorschaubilder der zwei oder mehr Dateien durch den Benutzer, die vergrößerten Vorschaubilder der zwei oder mehr Dateien in eine einzelne mehrseitige vergrößerte Vorschau, die eine Seite für jede ausgewählte Datei umfasst, bündelt und eine Seite der mehrseitigen vergrößerten Vorschau als das vergrößerte Vorschaubild (1007) anzeigt.

11. Informationsverarbeitungsvorrichtung nach Anspruch 10, wobei der Prozessor als Reaktion auf die Auswahl des Bündelns der vergrößerten Vorschaubilder der zwei oder mehr Dateien durch den Benutzer so konfiguriert ist, dass er Informationen zum Designieren einer Reihenfolge, in der die vergrößerten Vorschaubilder der zwei oder mehr Dateien angezeigt werden, anzeigt.

12. Programm, das einen Computer veranlasst, einen Prozess auszuführen, wobei der Prozess umfasst:
Anzeigen mehrerer Vorschaubilder, die jeweils eine von mehreren Dateien darstellen, auf einem Bildschirm;
Empfangen einer Vergrößerungsanweisung für eine Datei unter den mehreren Dateien, um ein vergrößertes Vorschaubild für die Datei anzuzeigen, wobei das vergrößerte Vorschaubild ein Bild ist, das durch Vergrößern des Vorschaubildes erhalten wird;
Bündelung, als Reaktion auf Empfangen von Vergrößerungsanweisungen für zwei oder mehr Dateien unter den mehreren Dateien, der vergrößerten Vorschaubilder der zwei oder mehr Dateien in eine einzelne mehrseitige vergrößerte Vorschau, die eine Seite für die zwei oder mehr Dateien umfasst, und
Anzeigen einer Seite der mehrseitigen vergrößerten Vorschau als das vergrößerte Vorschaubild zusammen mit einer oder mehreren Seitenumblättertasten, die mit Benutzerauswahl ermöglichen, durch Seiten, die in der mehrseitigen vergrößerten Vorschau enthalten sind, vorwärts oder rückwärts umzublättern; und
Empfangen, via die eine oder mehreren Seitenumblättertasten, einer Änderungsanweisung zum Anzeigen eines vergrößerten Vorschaubildes einer anderen Seite, die einer Datei entspricht, unter den mehreren Dateien, und
Anzeigen des vergrößerten Vorschaubildes der anderen Seite anstelle des vergrößerten Vorschaubildes der einen Datei.

## Revendications

1. Dispositif de traitement d'informations (1) comprenant un processeur (11) configuré pour :
afficher une pluralité d'images miniatures (410) chacune représentant un parmi une pluralité de fichiers sur un écran (40, 400) ;
recevoir une instruction d'agrandissement pour un fichier parmi la pluralité de fichiers pour afficher une image miniature agrandie (411) pour le fichier, l'image miniature agrandie étant une image obtenue en agrandissant l'image miniature (410) ;
regrouper, en réponse à la réception d'instructions d'agrandissement pour deux ou plusieurs fichiers parmi la pluralité de fichiers (1001), les images miniatures agrandies des deux ou plusieurs fichiers en une seule image miniature agrandie multipage comprenant une page pour chacun des deux ou plusieurs fichiers, et afficher une page de l'image miniature agrandie multipage en tant qu'image miniature agrandie ensemble avec un ou plusieurs boutons de tournage de page (301) qui, avec la sélection de l'utilisateur, permettent de tourner en avant ou en arrière à travers les pages de l'image miniature agrandie multipage ;
recevoir, via les un ou plusieurs boutons de tournage de page, une instruction de changement pour afficher une image miniature agrandie d'une autre page correspondant à un fichier parmi la pluralité de fichiers ; et
afficher l'image miniature agrandie de l'autre page au lieu de l'image miniature agrandie de l'un fichier.

2. Dispositif de traitement d'informations selon la revendication 1, dans lequel, en réponse à la réception de l'instruction d'agrandissement pour la pluralité de fichiers, le processeur est configuré pour afficher l'image miniature agrandie de l'un fichier parmi la pluralité de fichiers dans un cas où une condition prédéterminée est satisfaite.

3. Dispositif de traitement d'informations selon la revendication 2, dans lequel la condition prédéterminée est une condition déterminée sur la base d'une zone dans laquelle une image miniature agrandie de chacun de la pluralité de fichiers est affichée.

4. Dispositif de traitement d'informations selon la revendication 3, dans lequel la condition déterminée sur la base de la zone est satisfaite dans un cas où une zone dans laquelle une image miniature agrandie doit être affichée sur la base des instructions d'agrandissement pour la pluralité de fichiers chevauche une autre zone dans laquelle une autre image miniature agrandie doit être affichée sur la base des instructions d'agrandissement pour la pluralité de fichiers.

5. Dispositif de traitement d'informations selon la revendication 3 ou la revendication 4, dans lequel la zone est déterminée en fonction d'une quantité de données d'une image originale correspondant à chacune des images miniatures agrandies.

6. Dispositif de traitement d'informations selon l'une quelconque des revendications précédentes, en particulier la revendication 2, dans lequel la condition prédéterminée est satisfaite dans un cas où l'instruction d'afficher une image miniature agrandie de l'un fichier parmi la pluralité de fichiers est reçue d'un utilisateur.

7. Dispositif de traitement d'informations selon l'une quelconque des revendications précédentes, en particulier la revendication 1, dans lequel l'autre fichier est déterminé parmi la pluralité de fichiers pour lesquels l'instruction d'agrandissement est reçue en fonction d'un ordre prédéterminé qui est déterminé pour la pluralité de fichiers pour lesquels l'instruction d'agrandissement est reçue.

8. Dispositif de traitement d'informations selon l'une quelconque des revendications précédentes, en particulier la revendication 7, dans lequel l'ordre prédéterminé est déterminé par une instruction d'un utilisateur.

9. Dispositif de traitement d'informations selon l'une quelconque des revendications précédentes, en particulier la revendication 1, dans lequel le processeur est configuré pour afficher des informations indiquant un fichier correspondant à l'image miniature agrandie affichée ensemble avec l'image miniature agrandie.

10. Dispositif de traitement d'informations (1) comprenant un processeur (11) configuré pour :
afficher une pluralité d'images miniatures (410) chacune représentant un parmi une pluralité de fichiers sur un écran (40, 400), respectivement ;
en réponse à une instruction d'agrandissement pour afficher une image miniature agrandie obtenue en agrandissant l'image miniature pour deux ou plusieurs parmi lesdits fichiers (1001), afficher des informations permettant à un utilisateur de sélectionner s'il souhaite regrouper des images miniatures agrandies parmi lesdits deux ou plusieurs fichiers (501-504) ; et,
en réponse à une sélection de regroupement des images miniatures agrandies des deux ou plusieurs fichiers par l'utilisateur, regrouper les images miniatures agrandies des deux ou plusieurs fichiers en une seule image miniature agrandie multipage comprenant une page pour chaque fichier sélectionné et afficher une page de l'image miniature agrandie multipage en tant qu'image miniature agrandie (1007).

11. Dispositif de traitement d'informations selon la revendication 10, dans lequel, en réponse à la sélection de regroupement des images miniatures agrandies des deux ou plusieurs fichiers par l'utilisateur, le processeur est configuré pour afficher des informations pour désigner un ordre dans lequel les images miniatures agrandies des deux ou plusieurs fichiers sont affichées.

12. Programme amenant un ordinateur à exécuter un processus, le processus comprenant :
afficher une pluralité d'images miniatures chacune représentant un parmi une pluralité de fichiers sur un écran ;
recevoir une instruction d'agrandissement pour un fichier parmi la pluralité de fichiers pour afficher une image miniature agrandie pour le fichier, l'image miniature agrandie étant une image obtenue en agrandissant l'image miniature ;
regrouper, en réponse à la réception d'instructions d'agrandissement pour deux ou plusieurs fichiers parmi la pluralité de fichiers, les images miniatures agrandies des deux ou plusieurs fichiers en une seule image miniature agrandie multipage comprenant une page pour les deux ou plusieurs fichiers, et
afficher une page de l'image miniature agrandie multipage en tant qu'image miniature agrandie, ensemble avec un ou plusieurs boutons de tournage de page qui, avec la sélection de l'utilisateur, permettent de tourner en avant ou en arrière à travers les pages incluses dans l'image miniature agrandie multipage ; et
recevoir, via les un ou plusieurs boutons de tournage de page, une instruction de changement pour afficher une image miniature agrandie d'une autre page correspondant à un fichier parmi la pluralité de fichiers, et
afficher l'image miniature agrandie de l'autre page au lieu de l'image miniature agrandie de l'un fichier.
